# EUROPÄISCHE PATENTSCHRIFT

(11) **EP 4 093 651 B1**
(45) Veröffentlichungstag und Bekanntmachung des Hinweises auf die Patenterteilung: **08.11.2023**
(21) Anmeldenummer: 21701319.2
(22) Anmeldetag: 21.01.2021
(51) Int. Cl.: B62D 15/02, B62D 5/04

(54) **ÜBERLENKBARE FAHRERASSISTENZFUNKTION MIT VERBESSERTEM LENKGEFÜHL**
OVERSTEERABLE DRIVER ASSISTANCE FUNCTION WITH IMPROVED STEERING FEEL
FONCTION D'ASSISTANCE À LA CONDUITE MODIFIABLE PAR LE CONDUCTEUR PRÉSENTANT UNE SENSATION DE DIRECTION AMÉLIORÉE

(30) Priorität: 22.01.2020 DE 102020200703
(43) Veröffentlichungstag der Anmeldung: 30.11.2022
(73) Patentinhaber: VOLKSWAGEN AKTIENGESELLSCHAFT, 38440 Wolfsburg (DE)
(72) Erfinder: DREYER, Dirk, 31655 Stadthagen (DE)
(86) Internationale Anmeldenummer: PCT/EP2021/051371
(87) Internationale Veröffentlichungsnummer: WO 2021/148555

(56) Entgegenhaltungen:
- EP-A1- 1 074 904
- US-A1- 2004 262 063
- US-A1- 2019 126 925

## Beschreibung

Die Erfindung betrifft ein Fahrzeuglenksystem und ein Verfahren zum Betreiben eines Fahrzeuglenksystems. Das Fahrzeug kann ein Kraftfahrzeug sein und insbesondere ein Personenkraftwagen oder Lastkraftwagen. Das Fahrzeuglenksystem (hierin auch lediglich als Lenksystem bezeichnet) ist vorzugsweise elektromechanisch.

Typischerweise umfassen elektromechanische Lenkungen für Kraftfahrzeuge ein Steuergerät und einen elektrischen Servomotor, wobei das Steuergerät in Abhängigkeit von Eingangsgrößen ein Unterstützungsmoment und ein Rückstellmoment für den Servomotor berechnet. Eingangsgrößen sind beispielsweise ein Handdrehmoment an einer Lenkhandhabe und die Fahrzeuggeschwindigkeit. Auch winkelbasierte Eingangsgrößen können vorgesehen, wie hierin noch erläutert. Eine weitere Eingangsgröße kann beispielsweise die Temperatur sein, um Reibung der Lenkung zu kompensieren. Das Rückstellmoment wird typischerweise derart erzeugt, dass sich die Lenkung bei nicht anliegendem Handmoment in eine Mittenstellung bzw. Neutralstellung zurückstellt.

Es ist auch bekannt, Fahrerassistenzfunktionen vorzusehen, die unabhängig von Fahrervorgaben (d.h. fahrerautonom oder, anders ausgedrückt, automatisch) das Lenksystem betätigen und, genauer gesagt, Größen und/oder Signale zur Lenkwinkeleinstellung erzeugen können. Zum Erzielen der Lenkwinkeleinstellung kann basierend auf diesen Größen bzw. Signalen der Servomotor angesteuert werden.

Ein Bespiel einer Fahrerassistenzfunktion ist eine Spurhaltefunktion oder auch ein Spurhalteassistent. Dieser ist dazu eingerichtet, das Fahrzeug durch geeignete Lenkwinkelanpassungen in einem Toleranzbereich entlang einer Soll-Fahrspur zu halten. Für diese Fahrerassistenzfunktion wird oftmals ein positionsgeregelter Ansatz verwendet, wobei unter einer Position auch allgemein eine Winkelposition verstanden werden kann. Im Rahmen dieser Positionsregelung wird ein von der Fahrerassistenzfunktion zwecks Spurhalten vorgegebener Soll-Lenkwinkel mit einem Ist-Lenkwinkel verglichen und die vorliegende Winkeldifferenz durch Aufbringen geeigneter Lenkmomente mit dem Servomotor ausgeregelt.

Möchte ein Fahrer parallel zu einer aktiven Fahrerassistenzfunktion ein fahrererzeugtes Handlenkmoment bzw. einen Fahrer-Lenkwinkel vorgeben oder, mit anderen Worten, aufbringen, muss er in der Regel das von der Fahrerassistenzfunktion erzeugte Lenkmoment überlenken. Anders ausgedrückt spürt er dieses Lenkmoment (also in der Regel die Ausgabe des Positionsreglers) als ein das Lenkgefühl maßgeblich beeinflussendes Gegenmoment an einer Lenkhandhabe. Dieses Lenkgefühl kann sich von einem erwarteten und/oder für die Fahrsituation angemessenen Lenkgefühl signifikant unterscheiden, was aus Komfort- und Sicherheitsgründen unerwünscht ist.

Die DE 10 2014 226 781 A1 offenbart zur Verbesserung des Lenkgefühls, Soll-Vorgaben eines entsprechenden Positionsreglers von vornherein geeignet anzupassen.

Aus der EP 1 074 904 A1 ist ein Fahrzeuglenksystem mit einem Servomotor bekannt, mit einem Steuergerät, das eine Fahrerassistenzfunktion aufweist, um eine Spurhalteassistenzfunktion durchzuführen. EP 1 074 904 A1 offenbart insbesondere ein Fahrzeuglenksystem, mit:
- wenigstens einem Servomotor,
- einer Lenkhandhabe, mittels der vom Fahrer ein gewünschter Fahrer-Lenkwinkel vorgebbar ist;
- einem Steuergerät, das eine Fahrerassistenzfunktion aufweist, mit der ein Assistenz-Lenkwinkel zum Ansteuern des Servomotors fahrerautonom vorgebbar ist; und das wenigstens eine weitere Funktion aufweist, mit der nach Maßgabe einer erhaltenen Winkeldifferenz ein Rückstellmoment zum Reduzieren der Winkeldifferenz vorgebbar ist.

Aus der US 1004/0262063 A1 ist ein Fahrzeuglenksystem bekannt, um vollautomatisiert eine Spurhaltefunktion durchzuführen. Bei einem Lenkeingriff des Fahrers wird die Spurhaltefunktion abgeschaltet und bei Vorliegen bestimmter Bedingungen wieder eingeschaltet.

Ein weiteres Fahrzeuglenksystem ist aus der US 2009/126925 A1 bekannt.

Aufgabe der Erfindung ist es, eine alternative Möglichkeit zum Einstellen eines aus Sicht des Fahrers angemesseneren Lenkgefühls trotz aktiver Fahrerassistenzfunktion bereitzustellen. Diese Aufgabe wird durch die Gegenstände der beigefügten unabhängigen Ansprüche gelöst. Vorteilhafte Weiterbildungen sind in den abhängigen Ansprüchen angegeben. Es versteht sich, dass die vorstehenden Erläuterungen und Weiterbildungen auch auf die vorliegende Lösung zutreffen bzw. bei dieser vorgesehen sein können.

Allgemein wurde erkannt, dass eine Möglichkeit zum geeigneten Einstellen des Lenkgefühls darin besteht, beim Registrieren eines Fahrerlenkwunsches (also eines sich ändernden und/oder von Null verschiedenen Fahrer-Lenkwinkels) ein Rückstellmoment aktiv zu erzeugen, insbesondere unabhängig von der Fahrerassistenzfunktion. Dieses kann auf die Lenkhandhabe und zum Beispiel gegen eine Auslenkungsrichtung durch den Fahrer wirken. Es kann sich also um ein entgegen dem Fahrerwunsch wirkendes Moment handeln, das aus Sicht des Fahrers das Lenkgefühl maßgeblich beeinflusst und insbesondere als Lenkwiderstand bzw. Gegenmoment haptisch wahrnehmbar ist.

Zusammengefasst kann also vorgesehen sein, dass bei aktiver Fahrerassistenzfunktion und Registrierung eines Fahrerlenkwunsches (zum Beispiel durch Beobachten eines sich ändernden Fahrer-Lenkwinkels), die Ansteuerung des Servomotors wechselt und/oder umschaltet, und zwar zu einem Ansteuern durch eine andere, weitere Funktion.

Genauer gesagt kann das Rückstellmoment durch eine von der Fahrerassistenzfunktion unabhängige weitere Funktion erzeugt werden (zumindest mittelbar durch entsprechendes Ansteuern des Servomotors). Diese Funktion kann allgemein als eine Komfortfunktion bezeichnet werden. Prinzipiell kann es sich um jegliche das Lenkgefühl potenziell beeinflussende Funktion handeln. Allgemein kann diese Funktion (aber auch die Fahrerassistenzfunktion) Steuersignale erzeugen, um den Servomotor zum Erzielen des gewünschten Effekts (also Bereitstellen des Rückstellmoments bzw. Einstellen des Assistenz-Lenkwinkels) geeignet zu betreiben. Sofern hierin von dem Erzeugen eines Rückstellmoment durch die weitere Funktion gesprochen wird, versteht es sich, dass hiervon auch ein lediglich mittelbares Erzeugen durch geeignetes Ansteuern des Servomotors gemeint sein kann.

Die weitere Funktion, aber auch die Fahrerassistenzfunktion, können in einem Steuergerät implementiert und/oder durch ein Steuergerät ausgeführt oder von diesen umfasst sein. Sie können als Softwaremodule und/oder Softwarekomponenten realisiert sein. Diese können in einer Speichereinrichtung des Steuergeräts hinterlegt sein. Das Steuergerät kann wenigstens einen Prozessor umfassen, um die Softwaremodule /-komponenten auszuführen. Das Steuergerät kann Steuersignale für den Servomotor ausgeben und zum Beispiel in einem CAN-BUS speisen, der mit dem Servomotor verbunden ist.

Durch Umschalten der Ansteuerung des Servomotors von der Fahrerassistenzfunktion auf die weitere Funktion kann ein situationsgerechtes Lenkgefühl erzeugt werden. Dies gilt insbesondere dann, wenn eine Winkeldifferenz, auf deren Basis die weitere Funktion den Servomotor ansteuert, als Differenz zwischen Fahrer-Lenkwinkel und Assistenz-Lenkwinkel ermittelt wird. Das Rückstellmoment kann dann insbesondere hinsichtlich dessen Ausmaß bzw. Betrags nach Maßgabe dieser Winkeldifferenz gebildet werden. Genauer gesagt kann das Rückstellmoment allgemein anhand einer (zum Beispiel in der weiteren Funktion hinterlegten) Kennlinie erzeugt werden, die den Wert des zu erzeugenden Rückstellmoments in Abhängigkeit der erhaltenen Winkeldifferenz definiert.

Es hat sich gezeigt, dass auf diese Weise ein an die Fahrsituation angepasstes Lenkgefühl einstellbar ist. Dies gilt insbesondere im Vergleich zum Erzeugen eines Servormotor-Moments nach Maßgabe der Fahrerassistenzfunktion, die von einer anderen Winkeldifferenz ausgeht (Differenz zwischen Soll-Lenkwinkel zwecks Spurhalten und Ist-Lenkwinkel).

Insbesondere wird ein Fahrzeuglenksystem vorgeschlagen, mit:
- wenigstens einem Servomotor,
- einer Lenkhandhabe, mittels der vom Fahrer ein gewünschter Fahrer-Lenkwinkel (d. h. ein vom Lenksystem einzustellender bzw. umzusetzender Lenkwinkel) vorgebbar ist;
- einem Steuergerät, das eine Fahrerassistenzfunktion aufweist, mit der ein Assistenz-Lenkwinkel zum Ansteuern des Servomotors fahrerautonom vorgebbar ist; und das wenigstens eine weitere Funktion aufweist, mit der nach Maßgabe einer erhaltenen Winkeldifferenz ein Rückstellmoment zum Reduzieren der Winkeldifferenz (insbesondere an bzw. zum Erzeugen durch den Servomotor) vorgebbar ist;
wobei dann, wenn der Fahrer einen Fahrer-Lenkwinkel bei aktiver Fahrerassistenzfunktion vorgibt, mittels der weiteren Funktion ein Rückstellmoment auf Basis einer Winkeldifferenz von (bzw. zwischen) Fahrer-Lenkwinkel und Assistenz-Lenkwinkel vorgebbar und/oder erzeugbar ist. Insbesondere kann dann zum Ansteuern des Servomotors von der Fahrerassistenzfunktion auf die weitere Funktion gewechselt werden.

Sofern hierin von einem Lenkwinkel gesprochen wird, kann es sich um einen an den Fahrzeugrädern eingestellten Winkel handeln, zum Beispiel relativ zu einer Fahrzeuglängsachse. In an sich bekannter Weise kann dieser über ein bekanntes mechanisches Übersetzungsverhältnis zwischen Servomotor und Fahrzeugrädern durch Ansteuern des Servomotors präzise eingestellt werden. Beispielsweise kann der Servomotor auf eine Zahnstange einwirken, mit der die Fahrzeugräder mechanisch gekoppelt sind und mit der bevorzugt auch die Lenkhandhabe mechanisch gekoppelt ist.

Das Rückstellmoment kann an der Lenkhandhabe wirken und/oder zumindest mittelbar an diese übertragen werden. Es kann allgemein vom Servomotor erzeugt werden und über eine mechanische Kopplung mit der Lenkhandhabe an dieses übertragen werden. Die Lenkhandhabe kann dann zum Beispiel entsprechend dem Rückstellmoment verdreht werden und/oder als ein vom Fahrer wahrnehmbares Gegenmoment wirken. Der Begriff "Rückstell" bezieht sich dabei darauf, dass die Winkeldifferenz reduziert werden soll, die Lenkhandhabe also im Vergleich zu einer die Winkeldifferenz verursachenden Auslenkung rückgestellt und/oder gegensinnig verdreht werden soll. Insbesondere kann die weitere Funktion eine Regelung der Lenkhandhabe-Winkelposition durchführen, insbesondere in der Weise, dass Winkeldifferenzen zu einer Soll-Stellung ausgeglichen werden.

Der Fahrer kann mittels der Lenkhandhabe den Fahrer-Lenkwinkel zum Beispiel mechanisch vorgeben. Hierunter kann verstanden werden, dass die Lenkhandhabe mechanisch mit den Fahrzeugrädern gekoppelt ist (beispielsweise über eine Zahnstange, auf die vorzugsweise auch der Servomotor einwirkt). Nach Maßgabe des eingestellten Fahrer-Lenkwinkels kann dann die Zahnstange oder eine anderweitige mechanische Komponente und können somit auch die Fahrzeugräder ausgelenkt werden.

Dabei handelt es sich bei der weiteren Funktion um eine Rückstellfunktion, die (zum Beispiel prinzipiell und insbesondere bei Ausbleiben eines Fahrerhandmoments und/oder Fahrerlenkwunsches) dazu eingerichtet ist, die Lenkhandhabe in eine vorbestimmte Neutralstellung zurückzustellen, beispielsweise wenn die Winkeldifferenz einer Differenz eines aktuellen Lenkhandhabewinkels zu der Neutralstellung entspricht. Derartige Rückstellfunktionen sind bekannt. Sie können allgemein dazu dienen, die Rückkehr der Lenkhandhabe in einer Neutralstellung, die typischerweise einer Geradeausfahrt entspricht, zu erleichtern.

Auch erfindungsgemäß kann die Rückstellfunktion diesen Effekt bereitstellen, zum Beispiel in einem ersten Betriebsmodus ohne registrierten Fahrerlenkwunsch. Ein zweiter Betriebsmodus umfasst hingegen das geschilderte Erzeugen eines Rückstellmoments bei Überlenken der Fahrerassistenzfunktion durch den Fahrer.

In Abweichung einer herkömmlichen Rückstellfunktion ist vorliegend also vorgesehen, die Rückstellfunktion auch bei vorhandenem Fahrerlenkwunsch und/oder Fahrerhandmoment, dass der Fahrer auf die Lenkhandhabe ausübt, zu aktivieren. Dann kann die Rückstellfunktion allgemein basierend auf den gleichen Kennlinien und/oder gleichen Regeln oder Algorithmen ein zu erzeugendes Rückstellmoment ermitteln und den Servomotor entsprechend ansteuern. Dieses Rückstellmoment wird aber in der geschilderten neuartigen Betriebssituation erzeugt und zum Einstellen eines gewünschten Lenkgefühls verwendet.

Weiter ist vorgesehen, dass dann, wenn der Fahrer einen Fahrer-Lenkwinkel bei aktiver Fahrerassistenzfunktion vorgibt (also insbesondere gegen die Fahrerassistenzfunktion lenkt und/oder diese versucht zu überlenken) eine Ansteuerung des Servomotors auf Basis des Assistenz-Lenkwinkels zumindest temporär unterbrechbar ist. Wie geschildert, kann der Servomotor dann vorzugsweise ausschließlich durch die weitere Funktion angesteuert werden. Dies ermöglicht, dass das Lenkgefühl maßgeblich oder ausschließlich mittels dieser weiteren Funktion einstellbar ist.

Gemäß einer weiteren Ausführungsform umfasst die Fahrerassistenzfunktion einen Positionsregler, der dazu eingerichtet ist, den Assistenz-Lenkwinkel als eine Soll-Vorgabe zu erhalten und darauf basierend den Servomotor anzusteuern. Insbesondere kann zunächst eine Soll-Ist-Abweichung ermittelt werden, wobei als Ist-Vorgabe ein aktueller Lenkwinkel erhalten wird. Auf diese Weise kann ein der Fahrerassistenzfunktion gewünschter Lenkwinkel präzise per Regelung eingestellt werden. Durch die Möglichkeit, dann aber bedarfsweise zur weiteren Funktion zum Erzeugen eines Rückstellmoments zu wechseln, ist ein aus Sicht des Fahrers natürliches Lenkgefühl einstellbar. Dieses Lenkgefühl unterscheidet sich vorteilhafterweise von demjenigen, das bei einem Gegenlenken des Fahrers gegen den Positionsregler spürbar wäre.

Die Erfindung betrifft auch ein Fahrzeug, insbesondere ein Kraftfahrzeug und ferner insbesondere ein Personenkraftwagen oder einen Lastkraftwagen, umfassend ein Fahrzeuglenksystem nach einem der vorangehenden Aspekte.

Ferner betrifft die Erfindung ein Verfahren zum Betreiben eines Fahrzeuglenksystems, wobei das Fahrzeuglenksystem aufweist:
- wenigstens einen Servomotor, und
- eine Lenkhandhabe, mittels der vom Fahrer ein gewünschter Fahrer-Lenkwinkel vorgebbar ist;
wobei das Verfahren bei einer aktiven Fahrerassistenzfunktion, die einen Assistenz-Lenkwinkel zum Ansteuern des Servomotors fahrerautonom vorgibt, umfasst:
- Ermitteln, dass ein Fahrer-Lenkwinkel vom Fahrer vorgegeben wird;
- Ermitteln einer Winkeldifferenz von Fahrer-Lenkwinkel und Assistenz-Lenkwinkel;
- Erzeugen eines Rückstellmoments durch Ansteuern des Servomotors basierend auf der Winkeldifferenz.

Das Verfahren kann jegliches Merkmal, jeglichen Schritt und jegliche Weiterbildung umfassen, um sämtliche hierin geschilderten Effekte, Betriebszustände und Wechselwirkungen bereitzustellen. Insbesondere können sämtliche Erläuterungen zu und Weiterbildungen von Merkmalen des Fahrzeuglenksystems auch auf die gleichlautenden Verfahrensmerkmale zutreffen bzw. bei diesen vorgesehen sein. Allgemein kann das Verfahren mit einem Fahrzeuglenksystem gemäß jeglichem hierin geschilderten Aspekt ausgeführt werden. Insbesondere kann das Rückstellmoment mittels jeglicher weiteren Funktion der hierin geschilderten Art erzeugt werden.

Beispielsweise kann das Verfahren umfassen, dass bei zunächst aktiver Fahrerassistenzfunktion und Ermitteln der Vorgabe eines Fahrer-Lenkwinkels die Fahrerassistenzfunktion beendet und/oder unterbrochen wird, um den Servomotor alternativ mittels der weiteren Funktion anzusteuern. Insbesondere kann dann der Servomotor von einem Erzeugen von Lenkmomenten zum Bereitstellen der gewünschten Fahrerassistenzfunktion zu einem Erzeugen von Lenkmomenten zum Bereitstellen eines gewünschten Lenkgefühls und/oder zum Reduzieren der ermittelten Winkeldifferenz angesteuert werden. Zusammengefasst sieht eine Weiterbildung des Verfahrens vor, dass dann, wenn der Fahrer einen Fahrer-Lenkwinkel bei aktiver Fahrerassistenzfunktion vorgibt, eine Ansteuerung des Servomotors auf Basis des Assistenz-Lenkwinkels zumindest temporär unterbrochen wird.

Gemäß einer weiteren Ausführungsform des Verfahrens umfasst die Fahrerassistenzfunktion einen Positionsregler, der den Assistenz-Lenkwinkel als eine Soll-Vorgabe erhält und darauf basierend den Servomotor ansteuert.

Ausführungsformen der Erfindung werden im Folgenden anhand der beigefügten schematischen Figuren erläutert.
- Figur 1: zeigt eine Übersichtsdarstellung eines Fahrzeuglenksystems gemäß einer Ausführungsform, wobei das Fahrzeuglenksystem ein erfindungsgemäßes Verfahren ausführt.
- Figur 2: zeigt ein Ablaufschema des vom Fahrzeuglenksystem aus Figur 1 ausgeführten Verfahrens.

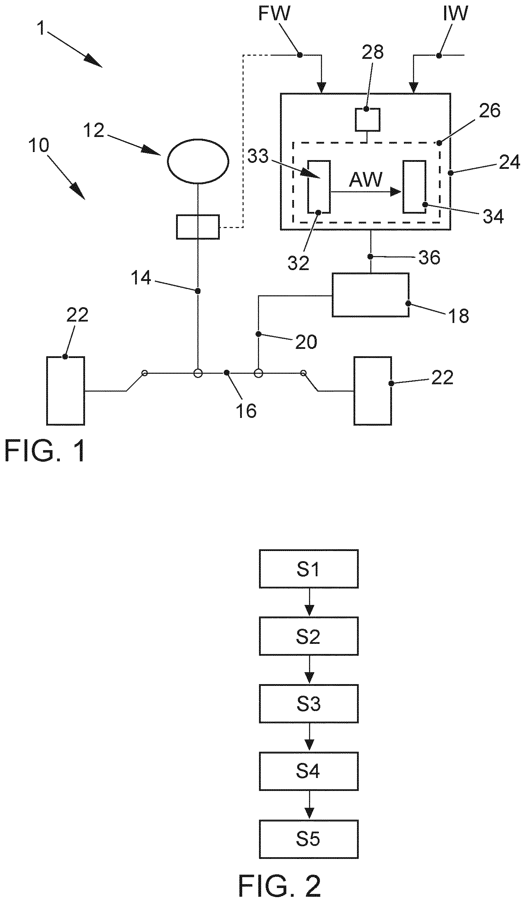

In Figur 1 ist ein Fahrzeuglenksystem 10 gemäß einer schematischen Ansicht gezeigt, dass von einem ansonsten nicht weiter dargestellten Fahrzeug 1 umfasst ist. Es umfasst eine Lenkhandhabe 12 in Form eines Lenkrads. Dieses ist über eine Lenkstange 14 mit einer Zahnstange 16 gekoppelt, sodass eine Rotation der Lenkhandhabe 12 in eine lineare Verschiebung (in Figur 1 von links nach rechts) der Zahnstange 16 umsetzbar ist.

Auf die Zahnstange 16 wirkt auch ein elektrischer Servomotor 18 über eine stark vereinfacht dargestellte mechanische Kopplung 20 ein. Auch dies ist dazu eingerichtet, eine Rotation einer Ausgangswelle des Servomotors 18 in eine lineare Verschiebung der Zahnstange 16 umzusetzen.

Die Zahnstange 16 ist mit zwei Fahrzeugrädern 22 einer Vorderachse des Fahrzeugs 1 mechanisch gekoppelt. In bekannter Weise erfolgt die Kopplung derart, dass eine lineare Verschiebung der Zahnstange 16 in Rotationen der Fahrzeugräder 22 um eine in Figur 1 vertikale Achse resultiert. Auf diese Weise können Lenkwinkel des Fahrzeugs bzw. der Fahrzeugräder 22 eingestellt werden.

Das Lenksystem 10 umfasst auch ein elektronisch und/oder digital betriebenes Steuergerät 24. Als ein allgemeiner und nicht auf die Details des Ausführungsbeispiels beschränkter Aspekt kann dieses Steuergerät 24 einteilig oder mehrteilig sein. In letzterem Fall kann es sich um eine Anordnung von Einzel-Steuergeräten oder Einzel-Steuerkomponenten handeln, die vorzugsweise miteinander kommunizieren, und als ein übergeordnetes Steuergerät 24 zusammenfassbar sind bzw. ein solches bilden.

Das Steuergerät 24 umfasst beispielhaft eine Speichereinrichtung 26 und eine Prozessoreinrichtung 28. Die Prozesseinrichtung 28 ist dazu eingerichtet, in der Speichereinrichtung 26 hinterlegte Softwarekomponenten bzw. Softwarefunktionen auszuführen. Bei diesen handelt es sich um eine Fahrerassistenzfunktion 32 und um eine weitere Funktion 34, die in dem gezeigten Beispiel eine Rückstellfunktion ist.

Beide der Funktionen 32, 34 sind dazu eingerichtet, Steuersignale zu generieren, die von dem Steuergerät 24 mittels einer Signalverbindung 36 (zum Beispiel einem CAN-Bus) zum Ansteuern des Servomotors18 an eben diesen ausgebbar sind.

Als Eingangssignal erhält das Steuergerät 24 und genauer gesagt die Fahrerassistenzfunktion 32 einen Ist-Lenkwinkel IW, der zum Beispiel von einem nicht dargestellten Sensor durch zumindest mittelbares Erfassen der Stellung der Fahrzeugräder 22 ermittelt wird. Beispielsweise kann der Sensor eine Position der Zahnstange 16 erfassen und basierend auf einem bekannten mechanischen Übersetzungsverhältnis dann den eingenommenen Ist-Lenkwinkel IW ermitteln.

Als ein weiteres Eingangssignal erhält das Steuergerät 24 und genauer gesagt die Rückstellfunktion 34 einen Fahrer-Lenkwinkel FW. Dieser kann mittels eines Winkelsensors ermittelt werden, der eine Winkelposition der Lenkhandhabe 12 und/oder der Lenkstange 14 ermittelt. Erneut kann darauf basierend und in Anbetracht eines bekannten mechanischen Übersetzungsverhältnisses auf den von den Fahrzeugrädern 22 eingenommenen bzw. vorgegebenen Lenkwinkel geschlossen werden.

Die Fahrerassistenzfunktion 32 ist dazu eingerichtet, einen Assistenz-Lenkwinkel AW zu ermitteln. Dieser kann als eine Soll-Vorgabe verwendet werden, um mit dem Ist-Lenkwinkel IW eine Soll-Ist-Abweichung für einen von der Fahrerassistenzfunktion 32 umfassen Positionsregler zu ermitteln. Wie im allgemeinen Beschreibungsteil erläutert, kann der Positionsregler dann den Servomotor 18 ansteuern, um diese Abweichung zu reduzieren.

Auf Basis einer erhaltenen oder ermittelten Winkeldifferenz erzeugt die Rückstellfunktion 34 durch Ansteuern des Servomotors 18 ein Rückstellmoment, um diese Winkeldifferenz zu reduzieren. Dieses Rückstellmoment ist vom Fahrer an der Lenkhandhabe 12 als Bestandteil des Lenkgefühls wahrnehmbar.

In an sich bekannter Weise kann dabei zunächst als Winkeldifferenz das Auslenken der Lenkhandhabe 12 gegenüber einer vorbestimmten Neutralstellung ermittelt werden. Dies erfolgt in Betriebszuständen ohne Fahrerlenkwunsch. Von der Rückstellfunktion 34 wird aber auch die im folgenden geschilderte zusätzliche Funktion bei vorliegendem Fahrerlenkwunsch bereitgestellt.

Wie in Figur 1 schematisch angedeutet, kann die Fahrerassistenzfunktion 32 den Assistenz-Lenkwinkel AW an die Rückstellfunktion 34 übermitteln. Darauf basierend kann die Rückstellfunktion 34 oder aber eine anderweitige, zwischengeschaltete Einheit, als eine weitere Winkeldifferenz die Differenz aus dem Assistenz-Lenkwinkel AW und dem Fahrer-Lenkwinkel FW ermitteln. Diese Winkeldifferenz wird verwendet, um in dem nachstehend geschilderten Betriebszustand ein Rückstellmoment mittels der Rückstellfunktion 34 zu erzeugen.

Genauer gesagt ist das Steuergerät 24 allgemein dazu eingerichtet, festzulegen, welche von Fahrerassistenzfunktion 32 oder Rückstell-Funktion 34 den Servomotor 18 zum Erzeugen gewünschter Lenkmoment bzw. Rückstellmomente ansteuert.

Im vorliegenden Fall wird die Rückstellfunktion 34 neben dem aus dem Stand der Technik bekannten Rückstellen der ausgelenkten Lenkhandhabe 12 bei ausbleibenden Lenkwunsch des Fahrers auch dann aktiviert, wenn der Fahrer einen entsprechenden Lenkwunsch bei aktiver Fahrerassistenzfunktion 32 äußert und einen Fahrer-Lenkwinkel FW vorgibt bzw. variiert.

Dann wechselt die Ansteuerung des Servomotors 18 von einem Ansteuern durch die Fahrerassistenzfunktion 32 zu einem Ansteuern durch die Rückstellfunktion 34. Folglich wird die Fahrerassistenzfunktion 32 bzw. das Ansteuern des Servomotors18 durch die Fahrerassistenzfunktion 32 unterbrochen und stattdessen zu einer Ansteuerung durch die Rückstellfunktion 34 auf Basis der geschilderten Winkeldifferenz aus Assistenz- und Fahrer-Lenkwinkel AW, FW gewechselt.

Der vorstehend geschilderte Verfahrensablauf ist im Ablaufschema von Figur 2 zusammengefasst. In einem ersten Schritt S1 wird die Fahrerassistenzfunktion 32 aktiviert. Diese führt daraufhin eine Regelung des Lenkwinkels durch, wobei sie bevorzugt fortlaufend einen Assistenz-Lenkwinkel AW als Soll-Vorgabe bestimmt, um eine vorgegebene Fahrspur zu halten.

In einem Schritt S2 wird vom Steuergerät 24 ein Fahrerlenkwunsch registriert und der vom Fahrer vorgegebene Fahrer-Lenkwinkel FW bestimmt.

In einem Schritt S3 wird daraufhin das Ansteuern des Servomotors 18 durch die Fahrerassistenzfunktion 32 unterbrochen. Stattdessen wird in einem Schritt S4 die Rückstellfunktion 34 aktiviert. Im Rahmen von diesem Schritt. oder auch davor oder danach. wird eine Winkeldifferenz aus dem (zum Beispiel aktuellen oder zuletzt ausgegebenen) Assistenz-Lenkwinkel AW und dem Fahrer-Lenkwinkel FW bestimmt. Diese wird von der Rückstellfunktion 34 verwendet, um ein aufzubringendes Rückstellmoment zu bestimmen.

In einem Schritt S5 wird der Servomotor 18 von der Rückstellfunktionen 34 angesteuert, um dieses Rückstellmoment zu erzeugen.

### Bezugszeichen

- 1: Fahrzeug
- 10: Fahrzeuglenksystem
- 12: Lenkhandhabe
- 14: Lenkstange
- 16: Zahnstange
- 18: Servomotor
- 20: Kopplung
- 22: Fahrzeugrad
- 24: Steuergerät
- 26: Speichereinrichtung
- 28: Prozessoreinrichtung
- 32: Fahrerassistenzfunktion
- 33: Positionsregler
- 34: Rückstellfunktion (weitere Funktion)
- 36: Signalverbindung

- FW: Fahrer-Lenkwinkel
- IW: Ist-Lenkwinkel
- AW: Assistenz-Lenkwinkel

## Patentansprüche

1. Fahrzeuglenksystem (10), mit:
- wenigstens einem Servomotor (18),
- einer Lenkhandhabe (12), mittels der vom Fahrer ein gewünschter Fahrer-Lenkwinkel (FW) vorgebbar ist;
- einem Steuergerät (24), das eine Fahrerassistenzfunktion (32) aufweist, mit der ein Assistenz-Lenkwinkel (AW) zum Ansteuern des Servomotors (18) fahrerautonom vorgebbar ist; und das wenigstens eine weitere Funktion (34) aufweist, mit der nach Maßgabe einer erhaltenen Winkeldifferenz ein Rückstellmoment zum Reduzieren der Winkeldifferenz vorgebbar ist;
wobei die weitere Funktion (34) eine Rückstellfunktion ist, die dazu eingerichtet ist, die Lenkhandhabe (12) bei nicht anliegendem Handmoment in eine vorbestimmte Neutralstellung zurückzustellen;
wobei dann, wenn der Fahrer einen Fahrer-Lenkwinkel (FW) bei aktiver Fahrerassistenzfunktion (32) vorgibt, mittels der weiteren Funktion (34) ein Rückstellmoment auf Basis einer Winkeldifferenz von Fahrer-Lenkwinkel (FW) und Assistenz-Lenkwinkel (AW) vorgebbar ist;
wobei eine Ansteuerung des Servomotors (18) auf Basis des Assistenz-Lenkwinkels (AW) zumindest temporär unterbrechbar ist.

2. Fahrzeuglenksystem (10) nach einem der vorangehenden Ansprüche,
**dadurch gekennzeichnet, dass** die Fahrerassistenzfunktion (32) einen Positionsregler umfasst, der dazu eingerichtet ist, den Assistenz-Lenkwinkel (AW) als eine Soll-Vorgabe zu erhalten und darauf basierend den Servomotor (18) anzusteuern.

3. Fahrzeug (1),
umfassend ein Fahrzeuglenksystem (10) nach einem der Ansprüche 1 bis 4.

4. Verfahren zum Betreiben eines Fahrzeuglenksystems (10), wobei das Fahrzeuglenksystem (10) aufweist:
- wenigstens einen Servomotor (18), und
- eine Lenkhandhabe (12), mittels der vom Fahrer ein gewünschter Fahrer-Lenkwinkel (FW) vorgebbar ist;
wobei das Verfahren bei einer aktiven Fahrerassistenzfunktion (32), die einen Assistenz-Lenkwinkel (AW) zum Ansteuern des Servomotors (18) fahrerautonom vorgibt, umfasst:
- Ermitteln, dass ein Fahrer-Lenkwinkel (FW) vom Fahrer vorgegeben wird;
- Ermitteln einer Winkeldifferenz von Fahrer-Lenkwinkel (FW) und Assistenz-Lenkwinkel (AW);
- Erzeugen eines Rückstellmoments durch Ansteuern des Servomotors (18) basierend auf der Winkeldifferenz;
wobei das Rückstellmoment mittels einer Rückstellfunktion erzeugt wird, die ansonsten dazu eingerichtet ist, die Lenkhandhabe (12) bei nicht anliegendem Handmoment in eine vorbestimmte Neutralstellung zurückzustellen;
wobei eine Ansteuerung des Servomotors (18) auf Basis des Assistenz-Lenkwinkels (AW) zumindest temporär unterbrochen wird.

5. Verfahren nach Anspruch 4,
**dadurch gekennzeichnet, dass** die Fahrerassistenzfunktion (32) einen Positionsregler (33) umfasst, der den Assistenz-Lenkwinkel (AW) als eine Soll-Vorgabe erhält und darauf basierend den Servomotor (18) ansteuert.

## Claims

1. Vehicle steering system (10) comprising:
- at least one servomotor (18),
- a steering handle (12), by means of which a desired driver steering angle (FW) can be specified by the driver;
- a control device (24) which has a driver assistance function (32) by means of which an assistance steering angle (AW) for controlling the servomotor (18) can be specified independently of the driver; and which has at least one further function (34) by means of which a restoring torque can be specified, in accordance with an obtained angle difference, for reducing the angle difference;
wherein the further function (34) is a reset function which is designed to return the steering handle (12) to a predetermined neutral position in the absence of manual torque;
wherein, when the driver specifies a driver steering angle (FW) when the driver assistance function (32) is active, a restoring torque can be specified on the basis of an angle difference between the driver steering angle (FW) and the assistance steering angle (AW) by means of the further function (34);
wherein control of the servomotor (18) can be at least temporarily interrupted on the basis of the assistance steering angle (AW).

2. Vehicle steering system (10) according to any of the preceding claims,
**characterized in that** the driver assistance function (32) comprises a position controller which is designed to obtain the assistance steering angle (AW) as a target specification and to control the servomotor (18) on the basis thereof.

3. Vehicle (1),
comprising a vehicle steering system (10) according to any of claims 1 to 4.

4. Method for operating a vehicle steering system (10), wherein the vehicle steering system (10) comprises:
- at least one servomotor (18), and
- a steering handle (12), by means of which a desired driver steering angle (FW) can be specified by the driver;
wherein, in the case of an active driver assistance function (32), which, independently of the driver, specifies an assistance steering angle (AW) for controlling the servomotor (18), the method involves:
- determining that a driver steering angle (FW) is specified by the driver;
- determining an angle difference between the driver steering angle (FW) and assistance steering angle (AW);
- generating a restoring torque by controlling the servomotor (18) on the basis of the angle difference;
wherein the restoring torque is generated by means of a reset function which is otherwise designed to return the steering handle (12) to a predetermined neutral position in the absence of manual torque;
wherein control of the servomotor (18) is at least temporarily interrupted on the basis of the assistance steering angle (AW).

5. Method according to claim 4,
**characterized in that** the driver assistance function (32) comprises a position controller (33) which obtains the assistance steering angle (AW) as a target specification and controls the servomotor (18) on the basis thereof.

## Revendications

1. Système de direction de véhicule (10), comportant :
- au moins un servomoteur (18),
- un volant de direction (12), au moyen duquel un angle de direction de conducteur (FW) souhaité peut être prédéfini par le conducteur ;
- un appareil de commande (24) qui présente une fonction d'assistance au conducteur (32), avec laquelle un angle de direction d'assistance (AW) peut être prédéfini pour la commande du servomoteur (18) indépendamment du conducteur ; et qui présente au moins une autre fonction (34), avec laquelle, conformément à une différence angulaire obtenue, un couple de rappel peut être prédéfini pour la réduction de la différence angulaire ;
dans lequel l'autre fonction (34) est une fonction de rappel qui est configurée pour remettre le volant de direction (12), en l'absence de couple manuel appliqué, dans une position neutre prédéterminée ;
dans lequel, ensuite, lorsque le conducteur prédéfinit un angle de direction de conducteur (FW) quand la fonction d'assistance au conducteur (32) est activée, un couple de rappel peut être prédéfini sur la base d'une différence angulaire entre l'angle de direction de conducteur (FW) et l'angle de direction d'assistance (AW) au moyen de l'autre fonction (34) ;
dans lequel une commande du servomoteur (18) peut être interrompue au moins temporairement sur la base de l'angle de direction d'assistance (AW).

2. Système de direction de véhicule (10) selon l'une des revendications précédentes,
**caractérisé en ce que** la fonction d'assistance au conducteur (32) comprend un régulateur de position qui est configuré pour obtenir l'angle de direction d'assistance (AW) en tant que consigne théorique et pour commander le servomoteur (18) sur la base de celui-ci.

3. Véhicule (1),
comprenant un système de direction de véhicule (10) selon l'une des revendications 1 à 4.

4. Procédé permettant de faire fonctionner un système de direction de véhicule (10), dans lequel le système de direction de véhicule (10) présente :
- au moins un servomoteur (18), et
- un volant de direction (12), au moyen duquel un angle de direction de conducteur (FW) souhaité peut être prédéfini par le conducteur ;
dans lequel, lorsqu'une fonction d'assistance au conducteur (32) est activée, laquelle prédéfinit un angle de direction d'assistance (AW) pour la commande du servomoteur (18) indépendamment du conducteur, le procédé comprend :
- la détermination selon laquelle un angle de direction de conducteur (FW) a été prédéfini par le conducteur ;
- la détermination d'une différence angulaire entre l'angle de direction de conducteur (FW) et l'angle de direction d'assistance (AW) ;
- la génération d'un couple de rappel par la commande du servomoteur (18) sur la base de la différence angulaire ;
dans lequel le couple de rappel est généré au moyen d'une fonction de rappel qui est autrement configurée pour remettre le volant de direction (12), en l'absence de couple manuel appliqué, dans une position neutre prédéterminée ;
dans lequel une commande du servomoteur (18) est interrompue au moins temporairement sur la base de l'angle de direction d'assistance (AW).

5. Procédé selon la revendication 4,
**caractérisé en ce que** la fonction d'assistance au conducteur (32) comprend un régulateur de position (33) qui obtient l'angle de direction d'assistance (AW) en tant que consigne théorique et commande le servomoteur (18) sur la base de celui-ci.
